# EUROPÄISCHE PATENTSCHRIFT

(11) **EP 0 894 963 B1**
(45) Veröffentlichungstag und Bekanntmachung des Hinweises auf die Patenterteilung: **12.11.2003**
(21) Anmeldenummer: 98113729.2
(22) Anmeldetag: 23.07.1998
(51) Int. Cl.: F02D 41/22

(54) **Überprüfung von Signalen zur Leistungssteuerung einer Brennkraftmaschine**
Monitoring of parameter signals for controlling the power of an internal combustion engine
Vérification de signaux pour la commande de puissance d'un moteur à combustion interne

(30) Priorität: 01.08.1997 DE 19733213
(43) Veröffentlichungstag der Anmeldung: 03.02.1999
(73) Patentinhaber: Siemens Aktiengesellschaft, 80333 München (DE)
(72) Erfinder: Neugärtner, Jörg, 53840 Troisdorf (DE)

(56) Entgegenhaltungen:
- DE-A- 4 032 451
- DE-A- 19 544 022
- US-A- 4 274 381
- US-A- 4 984 455

## Beschreibung

Die Erfindung betrifft ein Verfahren und eine Vorrichtung zur Überprüfung von Signalen zur Steuerung und/oder Regelung der Leistung von einer Brennkraftmaschine eines Fahrzeuges gemäß den jeweiligen Merkmalen des Oberbegriffes der unabhängigen Patentansprüche.

Verfahren und Vorrichtungen zur Steuerung und/oder Regelung der Leistung von Brennkraftmaschinen von Fahrzeugen sind bekannt. So wird bei einem bekannten Verfahren aus der Drehzahl und der Stellung eines die Leistung der Brennkraftmaschine bestimmenden Stellgliedes (Drosselklappenwinkel) aus einem Kennfeld die Luftmasse bestimmt, wobei aus der aus dem Kennfeld ausgelesenen Luftmasse die Last berechnet wird, die zur weiteren Steuerung/Regelung der Brennkraftmaschine herangezogen wird.

Die Sicherheit des Betriebes von Brennkraftmaschinen in Fahrzeugen erfordert es, daß Signale überwacht werden. Dies ist insbesondere bei sicherheitskritischen Signalen, in deren Abhängigkeit die Leistung der Brennkraftmaschine gesteuert oder geregelt wird, von besonderer Bedeutung, da ein Fehlsignal zu einer ungewollten Beschleunigung des Fahrzeuges und damit zu Gefahrensituationen, insbesondere für Personen, führen kann. Daher wurde schon vorgeschlagen, zur Sicherheitsprüfung nicht nur einen Sensor für einen Betriebsparameter zu verwenden, sondern für ein und denselben Betriebsparameter zwei gleichartige Sensoren einzusetzen, deren Ausgangssignale miteinander verglichen werden. Sollte ein Sensor ausfallen oder ein fehlerhaftes Signal liefern, kann dann immer noch auf das Ausgangssignal des funktionstüchtigen Sensors zurückgegriffen werden. Dies hat jedoch den Nachteil, daß diese Redundanz aufgrund der doppelten Anzahl von Sensoren kostenintensiv ist, wobei auch zu berücksichtigen ist, daß diese beiden Sensoren montiert werden müssen, wodurch ein unverhältnismäßig hoher Montageaufwand gegeben ist.

Aus der DE-19544022-A1 ist eine Einrichtung zur Bereitstellung einer Höheninformation in einem Kraftfahrzeug bekannt, bei der neben einem Höhensensorsignal eine weitere, redundante Höheninformation generiert wird, welche basierend auf der gemessenen Fahrzeugposition einem kartengestützen Ortungs- bzw. Navigationssystem entnommen wird. In der US-A-4984455 wird ein System zur Bestimmung einer Motordrehzahl beschrieben, wobei außer einem eigentlichen Motordrehzahlsensor ein Drehzahlsensor am Eingang eines Automatikgetriebes und ein weiterer am Ausgang des Automatikgetriebes verwendet werden. Die beiden Getriebesensoren sind in jedem Fall vorhanden, da sie zur Steuerung des Automatikgetriebes benötigt werden. Die Systeme aus der DE-19544022-A1 und der der US-A-4984455 haben gemeinsam, dass neben den Sensorsignalen der Motorsteuereinheit weitere, denselben Betriebsparameter betreffende Sensorsignale aus einem anderen im Fahrzeug vorhandenen System zur Verfügung stehen.

Der Erfindung liegt daher die Aufgabe zugrunde, ein weiteres Verfahren und eine weitere Vorrichtung zur Steuerung und/oder Regelung der Leistung von einer Brennkraftmaschine eines Fahrzeuges anzugeben, das die geschilderten Nachteile vermeidet und bei vermindertem Montage- und Kostenaufwand eine Überprüfung von Signalen zur Steuerung und/oder Regelung der Brennkraftmaschine gestattet.

Diese Aufgabe ist durch die Merkmale der unabhängigen Patentansprüche gelöst.

Die Erfindung macht sich die Tatsache zunutze, daß ein Signal, das zur Steuerung und/oder Regelung der Leistung der Brennkraftmaschine herangezogen wird, mit einem Parameter verglichen wird, wobei der Parameter hier der aktuell herrschende Luftdruck ist, der von einem schon im Fahrzeug vorhandenen Drucksensor erfaßt wird, wobei der Sensor einen Betriebsparameter erfaßt, der nicht Betriebsparameter der Brennkraftmaschine ist. Dies hat den entscheidenden Vorteil, daß auf einen Sensor zurückgegriffen werden kann, der z. B. bei anderen Systemen im Fahrzeug so oder so vorhanden ist und einen Parameter liefert, mit dem die sicherheitskritischen Signale überwacht werden können. Erfindungsgemäß ist der Drucksensor entweder Bestandteil einer Klimaanlage und wird zur Regelung des Betriebes der Klimaanlage benötigt oder er ist Bestandteil eines Tanksystemes zur Erfassung von Undichtigkeiten eines Tankes. Dadurch vermindert sich in effizienter Weise der Kosten- und Montageaufwand. Weicht das zu überwachende Signal zur Steuerung und/oder Regelung der Brennkraftmaschine deutlich von dem Parameter, der von dem schon im Fahrzeug vorhandenen Sensor erfaßt wird, ab, wird auf eine Fehlfunktion erkannt und es kann beispielsweise ein Notlaufprogramm für die Steuerung und/oder Regelung der Brennkraftmaschine aktiviert werden oder auch die Brennkraftmaschine abgestellt werden. Somit wird also in vorteilhafter Weise das sicherheitskritische Signal mit einem Parameter verglichen, der selber nicht abhängig ist von dem zu überwachenden sicherheitskritischen Signal.

In Weiterbildung der Erfindung wird eine Umrechnung der Signale zum Vergleich mit dem Betriebsparameter oder umgekehrt vorgenommen. Da in der Regel die Signale oder das Signal, das sicherheitskritisch ist und überwacht werden soll, nicht mit dem Betriebsparameter übereinstimmen, wird in vorteilhafter Weise eine Umrechnung in der Art vorgenommen, daß die Signale mit dem Betriebsparameter bzw. umgekehrt vergleichbar sind. Handelt es sich beispielsweise bei den Signalen und den Betriebsparametern um elektrische Spannungen oder Ströme, können diese zur Vergleichbarmachung normiert werden wobei es auch denkbar ist, wenn das Signal als Spannung und der Betriebsparameter als Strom vorliegt, der Strom in eine Spannung oder umgekehrt umgesetzt wird. Bei den Signalen bzw. dem Betriebsparameter (oder auch mehrere Betriebsparameter) kann es sich auch um Rechengrößen, digitale Worte oder dergleichen handeln, die dann in geeigneter Weise zur gegenseitigen Vergleichbarmachung umgerechnet werden. Wenn diese Signale nicht direkt miteinander vergleichbar sind, ist eine entsprechende Umrechnung erforderlich, die beispielsweise in der Art durchgeführt werden kann, daß zu dem Signal bzw. dem Parameter ein Wert dazu addiert wird, daß Signal bzw. der Parameter mit einem Faktor multipliziert oder durch einen solchen dividiert wird, wobei allgemein eine Umrechnung in der Art durchgeführt wird, daß letztendlich das Signal und der Parameter miteinander vergleichbar sind.

Weiterhin ist von Vorteil, daß der weitere Parameter von einem schon im Fahrzeug vorhandenen Sensor erfaßt wird, so daß dadurch ein weiterer Sensor zur Erfassung des weiteren Parameters entfallen kann. Dies verringert den Montageaufwand, die Ersatzteilhaltung und die Fehleranfälligkeit, da zumindest ein Sensor weniger vorhanden ist, der ausfallen kann. Darüber hinaus entfällt auch die gesamte Verdrahtung für einen solchen zusätzlichen Sensor, so daß dadurch auch Gewichtseinsparungen möglich sind. Der aktuelle Meßwert des weiteren Parameters wird der Steuereinrichtung über eine Datenleitung, insbesondere einen CAN-Bus, übermittelt. Der als Druck - ausgebildete Sensor ist beispielsweise Bestandteil einer Klimaanlage zur Regelung des Betriebes der Klimaanlage des Fahrzeuges, Bestandteil eines Tanksystemes zur Erfassung von Undichtigkeiten eines Tankes des Fahrzeuges oder, nicht erfindungsgemäß, auch einer pneumatisch arbeitenden Zentralverriegelungsanlage. Das heißt, es wird der bekannte Effekt ausgenutzt, schon bei anderen Steuereinrichtungen vorhandene Sensoren zu wiederum anderen Steuereinrichtungen zu übertragen, die dann diesen Meßwert für ihre eigenen Aufgaben verwenden können.

In den Patentansprüchen sind weiterhin Vorrichtungen angegeben, die beispielhaft zur Durchführung des erfindungsgemäßen Verfahrens eingesetzt werden können, auf die das Verfahren jedoch nicht beschränkt ist. Diese Vorrichtungen sind im folgenden beschrieben und anhand der Figuren erläutert.

### Es zeigen:

- Figur 1:: Vorrichtung mit einem schon im Fahrzeug vorhandenen Drucksensor,
- Figur 2:: Vorrichtung mit einer Datenleitung,
- Figur 3:: zumindest teilweise den inhaltlichen Aufbau der Steuereinrichtung.

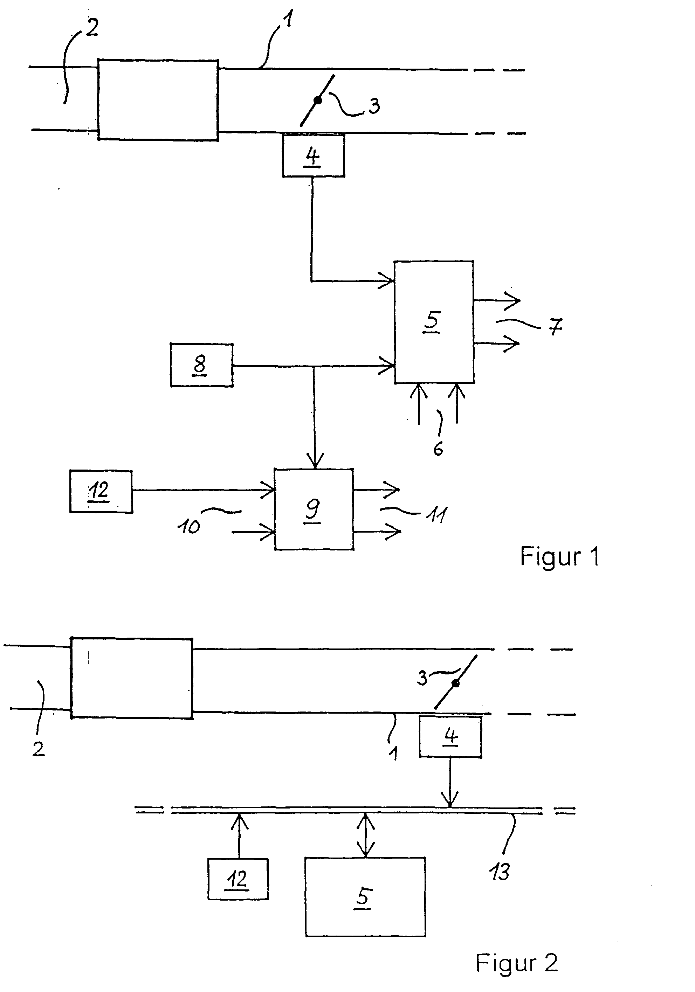

Die Figur 1 zeigt eine Vorrichtung zur Durchführung des Verfahrens mit einem Drucksensor, der schon im Fahrzeug vorhanden ist, jedoch nicht zur Erfassung von Betriebsparametern einer im Fahrzeug angeordneten Brennkraftmaschine ausgebildet ist. Ein Ansaugtrakt ist dargestellt durch ein Saugrohr 1 mit einem Luftfilter, der in an sich bekannter Weise einen Lufteinlaßbereich 2 aufweist, wobei die vom Lufteinlaßbereich 2 in den Luftfilter einströmende Luft in das Saugrohr 1 gelangt. Hinter dem Luftfilter ist eine Drosselklappe 3 angeordnet. Zur Messung der Stellung der Drosselklappe 3 ist ein Positionssensor 4 vorhanden, dessen Ausgangssignal einer Steuereinrichtung 5 zugeführt wird. Dieser Positionssensor 4 ist für die Regelung des Betriebes der Brennkraftmaschine zwangsweise erforderlich und somit vorhanden. Die Erfindung ist vorzugsweise bei Ottomotoren mit Drosselklappe anwendbar, kann aber auch mit anderen Stellgliedern zur Leistungseinstellung der Brennkraftmaschine und auch bei Dieselmotoren betrieben werden.

Der Steuereinrichtung 5 werden weitere Eingangsparameter 6 (wie Drehzahl der Brennkraftmaschine und weitere Betriebsparameter sowie gegebenenfalls Umgebungsgrößen) zugeführt, wobei zumindest auf Basis des Ausgangssignales des Positionssensors 4 und der weiteren Eingangsparameter 6 Ausgangssignale 7 erzeugt werden, die beispielsweise die Einspritzeinrichtung der Brennkraftmaschine ansteuern.

Der Atmosphärendruck beispielsweise, der zur Überwachung (Plausibilisierung) des Saugrohrdruckes, der mit einem eigenen Sensor erfasst wird oder auch dem Signal des Positionssensors 4 abgeleitet werden kann, herangezogen wird, wird von einem schon im Fahrzeug vorhandenen Drucksensor 8 erfaßt, wobei dieser Drucksensor 8 den Atmosphärendruck zum Beispiel an ein Klimasteuergerät 9 übermittelt. In Abhängigkeit des von dem Drucksensor 8 erfaßten Atmosphärendruckes und weiterer Eingangsparameter 10 erzeugt das Klimasteuergerät 9 Ausgangssignale 11 zur Regelung des Betriebes der Klimaanlage. Das Klimasteuergerät 9 ist noch mit einem Temperatursensor 12 verschaltet. Auf diese Art und Weise wird der eigentlich dem Klimasteuergerät 9 zugeordnete Drucksensor 8, der darüber hinaus mit dem Steuereinrichtung 5 verschaltet ist, dazu ausgenutzt, um den Atmosphärendruck zu messen, so daß ein separater Sensor zur Überwachung (Plausibilisierung) entfällt und das eigentlich zu überwachende Signal (hier Saugrohrdruck) mit einem davon unabhängigen Signal (hier Atmosphärendruck) überwacht wird. Die Steuereinrichtung 5 ist dazu ausgebildet, zumindest aus den Ausgangssignalen des Positionssensors 4 und des nicht näher bezeichneten Drehzahlsensors Ausgangssignale 7 zu bilden, wobei die Steuereinrichtung 5 auch zum Vergleich des zumindest einen Signales mit dem weiteren Parameter und bei Überschreiten einer vorgebbaren Abweichung zur Erkennung auf eine Fehlfunktion ausgebildet ist. Die Fehlfunktion kann optisch dem Fahrer des Fahrzeuges signalisiert werden, in einem Fehlerspeicher abgelegt werden oder zu einer Abschaltung der Einspritzung führen. Denkbar ist im Falle einer Fehlfunktion auch der Ablauf eines Notlaufprogrammes.

Figur 2 zeigt eine Vorrichtung zur Durchführung des Verfahrens, wobei zumindest die Ausgangssignale der Sensoren 4 und 12 über eine Datenleitung 13 an die Steuereinrichtung 5 übertragen werden. An der Datenleitung 13 können noch weitere Sensoren und/oder Steuergeräte angeschlossen sein, wobei den weiterhin angeschlossenen Steuergeräten beziehungsweise einem Teil davon zumindest die Ausgangssignale der Sensoren 4 und/oder 12 zuführbar sind.

Es sei noch darauf hingewiesen, daß auch der in Figur 1 gezeigte Drucksensor 8 an der Datenleitung 13 angeschlossen sein kann, so daß zumindest die Steuereinrichtung 5 dessen Ausgangssignale über die Datenleitung 14 erhält. Weiterhin kann auch das Klimasteuergerät 9 über die Datenleitung 14 das Ausgangssignal des Drucksensors 8 beziehungsweise des Temperatursensors 12 erhalten. Denkbar ist auch, daß der Drucksensor 8 einem Tanksystem des Fahrzeuges zur Erfassung des Atmosphärendruckes zugeordnet ist. Hierbei ist die Verwendung eines Absolutdrucksensors und ein druckfreier Betriebszustand (Entlüftung) des Tankes erforderlich.

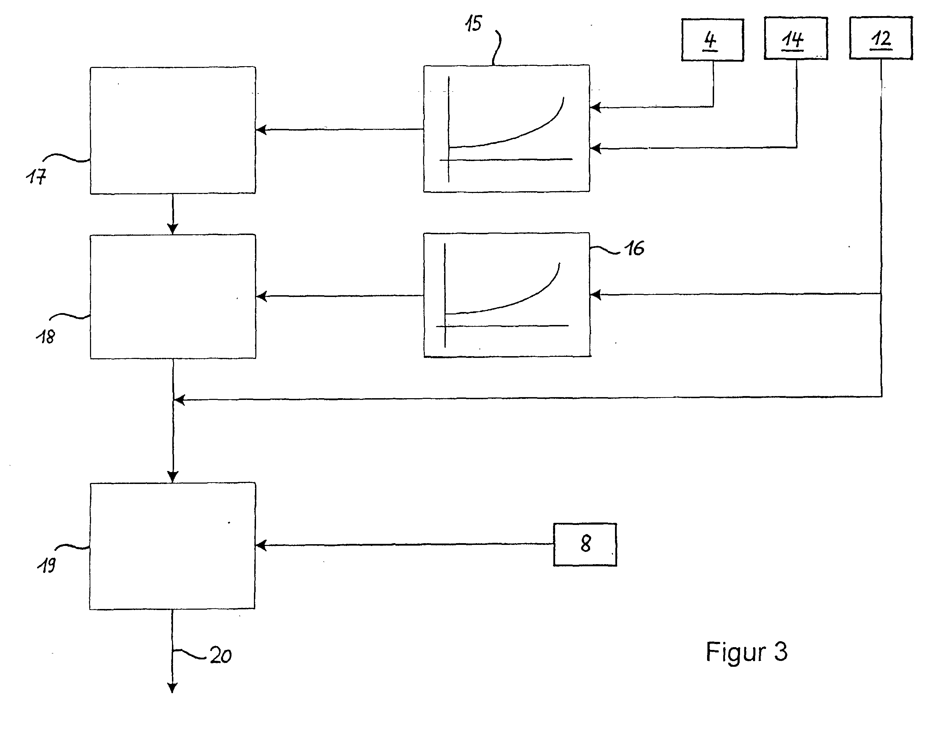

Figur 3 zeigt zumindest teilweise den inhaltlichen Aufbau der Steuereinrichtung 5. Ergänzend zu den schon in den Figuren 1 und 2 gezeigten Sensoren, die bei der Steuereinrichtung 5 gemäß Figur 1 und 2 auch vorhanden ist, ist ein Drehzahlsensor 14 gezeigt, wobei das Ausgangssignal des Positionssensors 4 und des Drehzahlsensors 14 einem ersten Kennfeld 15 zugeführt wird. Das Ausgangssignal des Temperatursensors 12 wird einem zweiten Kennfeld 16 zugeführt, wobei auch eine andere Zuordnung der Ausgangssignale der Sensoren zu den jeweiligen Kennfeldern denkbar ist. Mittels dem aus dem Kennfeld 15 ausgelesenen Wert (Signal) wird eine Berechnung 17 eines virtuellen Saugrohrdrucksignales (oder ein auf vorgebbare Normbedingungen normiertes Signal) durchgeführt, wobei auf Grundlage des aus dem Kennfeld 16 ausgelesenen Wertes (Signales) eine Berechnung 18 eines in Abhängigkeit der Temperatur korrigierten Saugrohrdrucksignales erfolgt. Denkbar ist auch, anstelle von zwei Kennfeldern 15 und 16 mehrdimensionale Kennfelder einzusetzen, aus denen dann die virtuellen Signale berechnet werden. Stehen die virtuellen Signale (oder auch nur ein virtuelles Signal) zur Verfügung, erfolgt ein Vergleich 19, wobei das virtuelle Saugrohrdrucksignal mit dem Ausgangssignal des weiteren Sensor (Drucksensor 8), der über die Datenleitung 13 der Steuereinrichtung 5 zugeführt wird, verglichen wird, gegebenenfalls nach einer Umrechnung des Ausgangssignal des weiteren Sensors. Somit steht am Ende dieses Vergleiches ein Ausgangssignal 20 zur Verfügung, das besagt, ob ein korrektes Signal für den Saugrohrdruck oder eine Fehlfunktion (zum Beispiel defekter Sensor) vorliegt. Dieses Ausgangssignal 20 kann dann in der Steuereinrichtung 5 weiter verarbeitet und/oder direkt über die Ausgänge 7 der Steuereinrichtung 5 zur weiteren Verarbeitung zur Verfügung gestellt werden. Bezugnehmend auf Figur 2 können also der Steuereinrichtung 5 sowohl Eingangssignale zugeführt als auch die in der Steuereinrichtung 5 vorhandenen oder berechneten Werte über die Datenleitung 13 ausgegeben werden. Das erfindungsgemäße Verfahren ist nicht auf die Überwachung des Saugrohrdrucksignales beschränkt, denn es können auch weitere einzelne Signale, Signalgruppen oder auch miteinander verknüpfte Signale (zum Beispiel ein Lastsignal, das aus einem Drehzahl- und Positionssignal der Drosselklappe berechnet wird) überwacht werden.

### Bezugszeichenliste

- 1.: Saugrohr mit Luftfilter
- 2.: Lufteinlaßbereich
- 3.: Drosselklappe
- 4.: Positionssensor
- 5.: Steuereinrichtung
- 6.: weitere Eingangsparameter
- 7.: Ausgangssignale
- 8.: Drucksensor
- 9.: Klimasteuergerät
- 10: weitere Eingangsparameter
- 11: Ausgangssignale
- 12: Temperatursensor
- 13: Datenleitung
- 14: Drehzahlsensor
- 15: Kennfeld
- 16.: Kennfeld
- 17.: Berechnung eines virtuellen Saugrohrdrucksignales
- 18.: Berechnung eines korrigierten virtuellen Saugrohrdrucksignales
- 19.: Vergleich
- 20.: Ausgangssignal

## Patentansprüche

1. Verfahren zur Überprüfung von Signalen zur Steuerung und/oder Regelung der Leistung von einer Brennkraftmaschine eines Fahrzeuges, wobei Sensoren Betriebsparameter der Brennkraftmaschine erfassen und zumindest ein entsprechendes Ausgangssignal erzeugen und wobei zumindest ein weiterer Parameter, der von einem schon im Fahrzeug vorhandenen Sensor erfasst wird und nicht Betriebsparameter der Brennkraftmaschine ist, mit dem zumindest einen Ausgangssignal verglichen und bei Überschreiten einer vorgebbaren Abweichung auf eine Fehlfunktion erkannt wird,
**dadurch gekennzeichnet, dass** der zumindest eine weitere Parameter der aktuell herrschende Luftdruck ist, der von einem Drucksensor erfasst wird, wobei der Drucksensor Bestandteil einer Klimaanlage zur Regelung des Betriebes der Klimaanlage oder Bestandteil eines Tanksystemes zur Erfassung von Undichtigkeiten eines Tankes ist.

2. Verfahren nach Anspruch 1, **dadurch gekennzeichnet, dass** eine Umrechnung des zumindest einen Ausgangssignales zum Vergleich mit dem zumindest einen weiteren Parameter oder umgekehrt vorgenommen wird.

3. Vorrichtung zur Überprüfung von Signalen zur Steuerung und/oder Regelung der Leistung von eine Brennkraftmaschine eines Fahrzeuges, wobei Betriebsparameter der Brennkraftmaschine von mit einer Steuereinrichtung (5) verbundenen Sensoren erfassbar sind und zumindest ein entsprechendes Ausgangssignal erzeugbar ist und wobei zumindest ein weiterer Parameter, der nicht Betriebsparameter der Brennkraftmaschine ist, von einem schon im Fahrzeug vorhandenen und mit der Steuereinrichtung (5) verbundenen Sensor erfassbar ist und wobei die Steuereinrichtung (5) zum Vergleich des zumindest einen Ausgangssignales mit dem zumindest einen weiteren Parameter und zur Erkennung auf eine Fehlfunktion bei Überschreiten einer vorgebbaren Abweichung ausgebildet ist, **dadurch gekennzeichnet, dass** der Sensor zur Erfassung des zumindest einen weiteren Parameters ein Drucksensor (8) zur Messung des aktuell herrschenden Luftdrucks ist, wobei der Drucksensor Bestandteil einer Klimaanlage zur Regelung des Betriebes der Klimaanlage oder Bestandteil eines Tanksystemes zur Erfassung von Undichtigkeiten eines Tankes ist.

4. Vorrichtung nach Anspruche 3, **dadurch gekennzeichnet, dass** die Steuereinrichtung (5) mit zumindest einer weiteren Steuereinrichtung des Fahrzeuges verbunden ist, wobei der weitere Sensor an der weiteren Steuereinrichtung angeschlossen ist.

5. Vorrichtung nach Anspruch 4, **dadurch gekennzeichnet, dass** die Steuereinrichtung (5) und die zumindest eine weitere Steuereinrichtung über eine Datenleitung (13), insbesondere einen CAN-Bus, miteinander verbunden sind.

## Claims

1. Method for checking signals for controlling and/or regulating the power of an internal combustion engine of a vehicle, sensors sensing operating parameters of the internal combustion engine and generating at least one corresponding output signal, and at least one further parameter which is sensed by a sensor already present in the vehicle and is not an operating parameter of the internal combustion engine, being compared with the at least one output signal and a malfunction being detected when a predefinable deviation is exceeded, **characterized in that** the at least one further parameter is the currently prevailing air pressure which is sensed by a pressure sensor, the pressure sensor being a component of an air conditioning system for regulating the operation of the air conditioning system or a component of a tank system for sensing leaks in a tank.

2. Method according to Claim 1, **characterized in that** the at least one output signal is converted for the purpose of comparison with the at least one further parameter, or vice versa.

3. Device for checking signals for controlling and/or regulating the power of an internal combustion engine of a vehicle, operating parameters of the internal combustion engine being capable of being sensed by sensors which are connected to a control device (5), and it being possible to generate at least one corresponding output signal, and at least one further parameter, which is not an operating parameter of the internal combustion engine, being capable of being sensed by a sensor already present in the vehicle and is connected to the control device (5), and the control device (5) being designed to compare the at least one output signal with the at least one further parameter and to detect a malfunction when a predefinable deviation occurs, **characterized in that** the sensor for sensing the at least one further parameter is a pressure sensor (8) for measuring the currently prevailing air pressure, the pressure sensor being a component of an air conditioning system for regulating the operation of the air conditioning system or a component of a tank system for sensing leaks in a tank.

4. Device according to Claim 3, **characterized in that** the control device (5) is connected to at least one further control device of the vehicle, the further sensor being connected to the further control device.

5. Device according to claim 4, **characterized in that** the control device (5) and the at least one further control device are connected to one another via a data line (13), in particular a CAN bus.

## Revendications

1. Procédé de surveillance de signaux destinés à commander et/ou à régler la puissance du moteur à combustion interne d'un véhicule, des capteurs détectant des paramètres de service du moteur à combustion interne et générant au moins un signal de sortie correspondant et au moins un paramètre supplémentaire détecté par un capteur d'ores et déjà présent dans le véhicule et n'étant pas un paramètre de service du moteur à combustion interne étant comparé avec ledit au moins un signal de sortie et lors du dépassement d'un écart prédéfinissable, un défaut de fonctionnement étant identifié,
**caractérisé en ce que** ledit au moins un paramètre supplémentaire est la pression d'air qui règne, qui est détectée par une sonde manométrique, la sonde manométrique étant un élément d'une climatisation destiné à régler le fonctionnement de la climatisation ou un élément d'un système inhérent à un réservoir, pour la détection de fuites dans ledit réservoir.

2. Procédé selon la revendication 1,
**caractérisé en ce qu'**on assiste à une conversion dudit au moins un signal de sortie pour sa comparaison avec ledit au moins un paramètre supplémentaire, ou vice-versa.

3. Dispositif pour la surveillance de signaux destinés à commander et/ou à régler la puissance du moteur à combustion inteme d'un véhicule, des paramètres de service du moteur à combustion interne pouvant être détectés par des capteurs reliés à un système de commande (5) et au moins un signal de sortie correspondant pouvant être généré et au moins un paramètre supplémentaire, qui n'est pas un paramètre de service du moteur à combustion interne pouvant être détecté par un capteur d'ores et déjà présent dans le véhicule et relié au système de commande (5), le système de commande étant conçu pour la comparaison dudit au moins un signal de sortie avec ledit au moins un paramètre supplémentaire et pour l'identification d'un défaut de fonctionnement, lors du dépassement d'un écart prédéfinissable,
**caractérisé en ce que**
le capteur pour la détection dudit au moins un paramètre supplémentaire est une sonde manométrique (8) prévue pour la mesure de la pression d'air qui règne, la sonde manométrique étant un élément d'une climatisation destiné à régler le fonctionnement de la climatisation ou un élément d'un système inhérent à un réservoir, destiné à détecter des fuites dans ledit réservoir.

4. Dispositif selon la revendication 3,
**caractérisé en ce que**
le système de commande (5) est relié avec au moins un système de commande supplémentaire du véhicule, le capteur supplémentaire étant relié au système de commande supplémentaire.

5. Dispositif selon la revendication 4,
**caractérisé en ce que**
le système de commande (5) et ledit au moins un système de commande supplémentaire sont reliés entre eux par l'intermédiaire d'une ligne de données (13), en particulier un bus CAN.
